# EUROPEAN PATENT APPLICATION

(11) **EP 3 579 146 A1**
(43) Date of publication of application: **11.12.2019**
(21) Application number: 18835563.0
(22) Date of filing: 19.07.2018
(51) Int. Cl.: G06K 9/62

(54) **IMAGING PROCESSING METHOD AND DEVICE**

(30) Priority: 20.07.2017 CN 201710594226
(71) Applicant: Alibaba Group Holding Limited, Grand Cayman (KY)
(72) Inventor: JIANG, Nan, Hangzhou Zhejiang 311121 (CN); GUO, Mingyu, Hangzhou Zhejiang 311121 (CN)
(74) Representative: Finnegan Europe LLP
(86) International application number: PCT/CN2018/096278
(87) International publication number: WO 2019/015645

(57) **Abstract**

An image processing method and apparatus are provided in embodiments of this application. The method mainly comprises the following process: acquiring features of multiple images of a target object and a standard feature of the target object; and determining trusted images of the target object from the multiple images of the target object according to similarities between the features of the multiple images of the target object and the standard feature thereof, wherein similarities between features of the trusted images of the target object and the standard feature of the target object meet a preset similarity requirement. The image processing method provided in the embodiments of this application can be applied to application scenarios such as image comparison, identity recognition, target object search, and similar target object determination.

## Description

### Technical Field

This application relates to the field of image processing, and in particular, to an image processing method and apparatus.

### Technical Background

With the development of image processing technologies, image processing has been applied in many fields, such as the face recognition payment field and the identity recognition field. During image processing, it is usually necessary to take images saved in a system as a processing basis, and obtain a processing result by processing the images saved in the system. For example, a base image saved in the system is compared with a collected user image to verify the user identity.

For the same target object, as images of the target object saved in the system vary in quality, it is necessary to provide a technical solution to select high-quality images of the target object from multiple base images of the target object, thus improving an image processing effect.

### Summary of the Invention

An objective of embodiments of this application is to provide an image processing method and apparatus, in which images more similar to a standard feature of a target object are determined from multiple images of the target object based on the standard feature of the target object, so that all the selected images are suitable for image processing, thereby improving an image processing effect.

To solve the above technical problem, the embodiments of this application are implemented as follows.

An image processing method is provided in the embodiments of this application, comprising:
acquiring features of multiple images of a target object and a standard feature of the target object; and
determining trusted images of the target object from the multiple images according to similarities between the features of the multiple images and the standard feature, wherein similarities between features of the trusted images and the standard feature meet a preset similarity requirement.

Another image processing method is provided in the embodiments of this application, comprising:
acquiring trusted images of a first target object and trusted images of a second target object; and
determining, according to the trusted images of the first target object and the trusted images of the second target object, whether the first target object is similar to the second target object,
wherein the trusted images of the first target object are images determined from multiple images of the first target object, and similarities between features of the trusted images of the first target object and a standard feature of the first target object meet a first preset similarity requirement; the trusted images of the second target object are images determined from multiple images of the second target object, and similarities between features of the trusted images of the second target object and a standard feature of the second target object meet a second preset similarity requirement.

A yet another image processing method is provided in the embodiments of this application, comprising:
acquiring features of multiple images of a first target object, a standard feature of the first target object, features of multiple images of a second target object, and a standard feature of the second target object;
determining trusted images of the first target object from the multiple images of the first target object according to similarities between the features of the multiple images of the first target object and the standard feature of the first target object, and determining trusted images of the second target object from the multiple images of the second target object according to similarities between the features of the multiple images of the second target object and the standard feature of the second target object, wherein similarities between features of the trusted images of the first target object and the standard feature thereof meet a first preset similarity requirement, and similarities between features of the trusted images of the second target object and the standard feature thereof meet a second preset similarity requirement; and
determining, according to the trusted images of the first target object and the trusted images of the second target object, whether the first target object is similar to the second target object.

An image processing apparatus is provided in the embodiments of this application, comprising:
a feature acquisition module configured to acquire features of multiple images of a target object and a standard feature of the target object; and
an image selection module configured to determine trusted images of the target object from the multiple images according to similarities between the features of the multiple images and the standard feature, wherein similarities between features of the trusted images and the standard feature meet a preset similarity requirement.

Another image processing apparatus is provided in the embodiments of this application, comprising:
an image acquisition module configured to acquire trusted images of a first target object and trusted images of a second target object; and
an image comparing module configured to determine, according to the trusted images of the first target object and the trusted images of the second target object, whether the first target object is similar to the second target object,
wherein the trusted images of the first target object are images determined from multiple images of the first target object, and similarities between features of the trusted images of the first target object and a standard feature of the first target object meet a first preset similarity requirement; the trusted images of the second target object are images determined from multiple images of the second target object, and similarities between features of the trusted images of the second target object and a standard feature of the second target object meet a second preset similarity requirement.

A yet another image processing apparatus is provided in the embodiments of this application, comprising:
a data acquisition module configured to acquire features of multiple images of a first target object, a standard feature of the first target object, features of multiple images of a second target object, and a standard feature of the second target object;
an image determining module configured to determine trusted images of the first target object from the multiple images of the first target object according to similarities between the features of the multiple images of the first target object and the standard feature of the first target object, and determine trusted images of the second target object from the multiple images of the second target object according to similarities between the features of the multiple images of the second target object and the standard feature of the second target object, wherein similarities between features of the trusted images of the first target object and the standard feature thereof meet a first preset similarity requirement, and similarities between features of the trusted images of the second target object and the standard feature thereof meet a second preset similarity requirement; and
an image judging module configured to determine, according to the trusted images of the first target object and the trusted images of the second target object, whether the first target object is similar to the second target object.

An image processing device is provided in the embodiments of this application, comprising:
a processor; and
a memory configured to store a computer executable instruction, wherein when executed, the executable instruction causes the processor to:
   acquire features of multiple images of a target object and a standard feature of the target object; and
   determine trusted images of the target object from the multiple images according to similarities between the features of the multiple images and the standard feature, wherein similarities between features of the trusted images and the standard feature meet a preset similarity requirement.

Another image processing device is provided in the embodiments of this application, comprising:
a processor; and
a memory configured to store a computer executable instruction, wherein when executed, the executable instruction causes the processor to:
   acquire trusted images of a first target object and trusted images of a second target object; and
   determine, according to the trusted images of the first target object and the trusted images of the second target object, whether the first target object is similar to the second target object,
   wherein the trusted images of the first target object are images determined from multiple images of the first target object, and similarities between features of the trusted images of the first target object and a standard feature of the first target object meet a first preset similarity requirement; the trusted images of the second target object are images determined from multiple images of the second target object, and similarities between features of the trusted images of the second target object and a standard feature of the second target object meet a second preset similarity requirement.

A yet another image processing device is provided in the embodiments of this application, comprising:
a processor; and
a memory configured to store a computer executable instruction, wherein when executed, the executable instruction causes the processor to:
   acquire features of multiple images of a first target object, a standard feature of the first target object, features of multiple images of a second target object, and a standard feature of the second target object;
   determine trusted images of the first target object from the multiple images of the first target object according to similarities between the features of the multiple images of the first target object and the standard feature of the first target object, and determine trusted images of the second target object from the multiple images of the second target object according to similarities between the features of the multiple images of the second target object and the standard feature of the second target object, wherein similarities between features of the trusted images of the first target object and the standard feature thereof meet a first preset similarity requirement, and similarities between features of the trusted images of the second target object and the standard feature thereof meet a second preset similarity requirement; and
   determine, according to the trusted images of the first target object and the trusted images of the second target object, whether the first target object is similar to the second target object.

A storage medium configured to store a computer executable instruction is provided in the embodiments of this application, wherein when executed, the executable instruction implements the following process:
acquiring features of multiple images of a target object and a standard feature of the target object; and
determining trusted images of the target object from the multiple images according to similarities between the features of the multiple images and the standard feature, wherein similarities between features of the trusted images and the standard feature meet a preset similarity requirement.

Another storage medium configured to store a computer executable instruction is provided in the embodiments of this application, wherein when executed, the executable instruction implements the following process:
acquiring trusted images of a first target object and trusted images of a second target object; and
determining, according to the trusted images of the first target object and the trusted images of the second target object, whether the first target object is similar to the second target object,
wherein the trusted images of the first target object are images determined from multiple images of the first target object, and similarities between features of the trusted images of the first target object and a standard feature of the first target object meet a first preset similarity requirement; the trusted images of the second target object are images determined from multiple images of the second target object, and similarities between features of the trusted images of the second target object and a standard feature of the second target object meet a second preset similarity requirement.

A yet another storage medium configured to store a computer executable instruction is provided in the embodiments of this application, wherein when executed, the executable instruction implements the following process:
acquiring features of multiple images of a first target object, a standard feature of the first target object, features of multiple images of a second target object, and a standard feature of the second target object;
determining trusted images of the first target object from the multiple images of the first target object according to similarities between the features of the multiple images of the first target object and the standard feature of the first target object, and determining trusted images of the second target object from the multiple images of the second target object according to similarities between the features of the multiple images of the second target object and the standard feature of the second target object, wherein similarities between features of the trusted images of the first target object and the standard feature thereof meet a first preset similarity requirement, and similarities between features of the trusted images of the second target object and the standard feature thereof meet a second preset similarity requirement; and
determining, according to the trusted images of the first target object and the trusted images of the second target object, whether the first target object is similar to the second target object.

With the technical solutions in the embodiments, trusted images more similar to a standard feature of a target object and capable of reflecting the standard feature of the target object can be determined from multiple images of the target object based on the standard feature of the target object, so that all the selected trusted images are suitable for image processing, thus improving an image processing effect.

### Brief Description of the Drawings

In order to illustrate the technical solutions in the embodiments of this application or in the prior art more clearly, the accompanying drawings to be used in descriptions of the embodiments or the prior art will be briefly described below. It is apparent that the accompanying drawings in the following description are only some embodiments recorded in this application, and other accompanying drawings can also be obtained by those of ordinary skill in the art according to these accompanying drawings without creative efforts.
FIG. 1 is a first schematic flowchart of an image processing method according to an embodiment of this application;
FIG. 2a is a schematic diagram of determining trusted images of a target object according to a standard image of the target object according to an embodiment of this application;
FIG. 2b is a schematic diagram of distribution of similarities between features of multiple images and a standard feature according to an embodiment of this application;
FIG. 3 is a second schematic flowchart of an image processing method according to an embodiment of this application;
FIG. 4 is a schematic diagram of comparing, according to trusted images, whether a first target object is similar to a second target object according to an embodiment of this application;
FIG. 5 is a third schematic flowchart of an image processing method according to an embodiment of this application;
FIG. 6 is a fourth schematic flowchart of an image processing method according to an embodiment of this application;
FIG. 7 is a fifth schematic flowchart of an image processing method according to an embodiment of this application;
FIG. 8 is a first schematic diagram of module composition of an image processing apparatus according to an embodiment of this application;
FIG. 9 is a second schematic diagram of module composition of an image processing apparatus according to an embodiment of this application;
FIG. 10 is a third schematic diagram of module composition of an image processing apparatus according to an embodiment of this application; and
FIG. 11 is a schematic structural diagram of an image processing device according to an embodiment of this application.

### Detailed Description

To enable those skilled in the art to better understand the technical solutions in this application, the technical solutions in the embodiments of this application will be described clearly and completely below with reference to the accompanying drawings in the embodiments of this application. It is apparent that the described embodiments are only a part rather than all of the embodiments of this application. All other embodiments derived by those of ordinary skill in the art based on the embodiments of this application without creative efforts should fall within the protection scope of this application.

An image processing method and apparatus are provided in the embodiments of this application, which can select trusted images of a target object in multiple images of the target object, and further can determine, based on the trusted images of the target object, whether the target object is similar to another target object. The trusted images of the target object selected are more similar to a standard feature of the target object, and can reflect the standard feature of the target object.

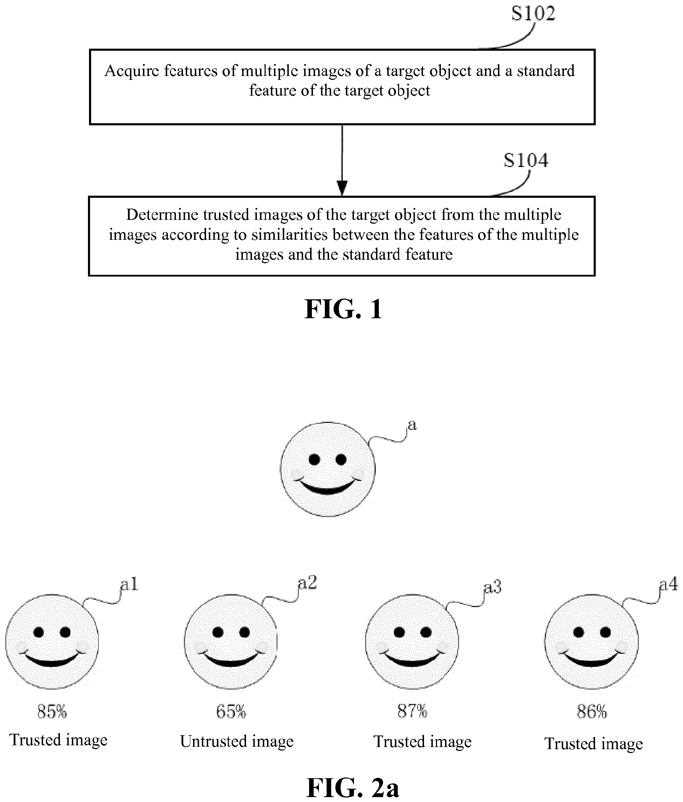

FIG. 1 is a first schematic flowchart of an image processing method according to an embodiment of this application. The method is performed by a server. As shown in FIG. 1, the method at least includes the following steps.

In step S102, features of multiple images of a target object and a standard feature of the target object are acquired.

In step S104, trusted images of the target object are determined from the multiple images according to similarities between the features of the multiple images and the standard feature, wherein similarities between features of the trusted images and the standard feature meet a preset similarity requirement.

In the image processing method according to this embodiment, features of multiple images of a target object and a standard feature of the target object are acquired first, and then trusted images of the target object are determined from the multiple images according to similarities between the features of the multiple images and the standard feature, wherein similarities between features of the trusted images and the standard feature meet a preset similarity requirement. As can be seen, according to the image processing method in this embodiment, trusted images more similar to the standard feature of the target object and capable of reflecting the standard feature of the target object can be determined from the multiple images of the target object based on the standard feature of the target object, so that all the selected trusted images are suitable for image processing, thus improving an image processing effect.

In this embodiment, the target object may be a natural person or an article. In the step S102, multiple pre-stored images of a target object can be read from a local database or a remote database, and features of the multiple images of the target object can be acquired, wherein each image of the target object has a corresponding feature.

The standard feature of the target object refers to a feature that can reflect the target object accurately, and selecting trusted images from the multiple images of the target object by using the feature that can reflect the target object accurately can ensure that the trusted images can also reflect the target object accurately. Considering that the standard feature needs to reflect the target object accurately, in this embodiment, the standard feature of the target object is acquired by the following manner (a1) or (a2):
(a1) acquiring an average feature of the multiple images, and taking the average feature of the multiple images as the standard feature of the target object; or
(a2) acquiring an average feature of the multiple images, and taking a feature in the features of the multiple images that is most similar to the average feature as the standard feature of the target object.

In the manner (a1), features of the multiple images of the target object are averaged, and a specific averaging method can be determined according to an actual implementation scenario, which is not limited here. In a specific implementation scenario, feature vectors, which are in the same dimension, of all acquired images can be averaged, thus obtaining an average feature of all the images. In this manner, the average feature of all the acquired images is taken as the standard feature of the target object.

In the manner (a2), an average feature of the multiple images is acquired first. This process is identical to that in the manner (a1), and is not elaborated here. As each image of the target object has a corresponding feature, a feature most similar to the average feature is determined from the features of the multiple images as the standard feature of the target object. Specifically, a similarity between the feature of each image and the average feature is calculated in the multiple images of the target object respectively to obtain an image with the highest similarity, and the feature of the image with the highest similarity is taken as the standard feature of the target object. In this manner, an image having a feature most similar to the average feature can be obtained. The image can be referred to as a standard image. The standard image reflects the standard feature of the target object, and can be used in other image processing processes of the target object.

It can be known by comparing the manner (a1) and manner (a2) that the process of determining the standard feature is simple and easy to operate in the manner (a1), while a standard image most similar to the standard feature can be further obtained in the process of determining the standard feature in the manner (a2), thus facilitating other image processing processes of the target object. Those of ordinary skill in the art can select either of the manner (a1) and the manner (a2) according to an actual situation to determine the standard feature of the target object.

In the step S104, the trusted images of the target object can be determined from the multiple images specifically according to similarities between the features of the multiple images and the standard feature in the following manner (b1) or (b2):
(b1) taking some or all of images among the multiple images having similarities between features thereof and the standard feature greater than a preset similarity threshold as the trusted images of the target object; or
(b2) determining distribution data of the similarities between the features of the multiple images and the standard feature, determining a similarity interval in the distribution data in which an image density is greater than a preset density, and taking some or all images corresponding to the determined similarity interval as the trusted images of the target object.

In the manner (b1), a similarity between a feature of each image in the multiple images of the target object and the standard feature of the target object is calculated respectively, and then multiple images having similarities greater than the preset similarity threshold are determined. It can be appreciated that the multiple images are all very close to the standard feature of the target object, and all can reflect the standard feature of the target object. However, considering that the calculation speed will be affected as the quantity of the multiple images may be very large; therefore, in this manner, if the calculation speed is not taken into account, all of the determined multiple images can be taken as the trusted images of the target object; and if the calculation speed is taken into account, some of the determined multiple images can be taken as the trusted images of the target object. In this manner, the preset similarity threshold is a value preset by a server, and the preset manner can be set by the server according to an implementation scenario of this embodiment.

A specific example is as follows. A similarity between a feature of each image in the multiple images of the target object and the standard feature of the target object is calculated, the multiple images of the target object are sorted in an order from the one having the highest similarity to the one having the lowest similarity. In the sorting, images having similarities greater than the preset similarity threshold are determined. In consideration of the requirement for the calculation speed, if the quantity of the images having similarities greater than the preset similarity threshold is greater than or equal to a certain value, for example, 100, the first half of the certain quantity of the images (50 images in this case) having similarities greater than the preset similarity threshold are selected as the trusted images of the target object in an order from the one having the highest similarity to the one having the lowest similarity. If the quantity of the images having similarities greater than the preset similarity threshold is less than a certain value, the first half of the quantity of the images having similarities greater than the preset similarity threshold are selected as the trusted images of the target object in an order from the one having the highest similarity to the one having the lowest similarity.

For example, the standard feature of the target object is a feature of a standard image of the target object. FIG. 2a is a schematic diagram of determining trusted images of a target object according to a standard image of the target object according to an embodiment of this application. As shown in FIG. 2a, the target object is a natural person, an image a is a standard image of the target object, and images a1, a2, a3, and a4 are some images in the multiple acquired images of the target object. Similarities between the standard image a and the images a1, a2, a3, and a4 are calculated respectively to obtain that the similarities between the standard image a and the images a1, a2, a3, and a4 are respectively 85%, 65%, 87%, and 86%. The preset similarity threshold is set to 80%, so it is determined that a1, a3, and a4 are trusted images of the target object, and a2 is an untrusted image.

In the manner (b2), a similarity between a feature of each image in the multiple images of the target object and the standard feature of the target object is calculated respectively to obtain multiple pieces of similarity data. Statistics is conducted on distribution of the multiple pieces of similarity data to obtain distribution data. The distribution data can be presented in the form of a statistical distribution histogram. The distribution data includes multiple similarity intervals, and the quantity of images corresponding to each similarity interval is marked. A similarity interval in the distribution data in which an image density is greater than a preset density is determined. Here, the image density can be represented with a ratio of the quantity of images in the similarity interval to a similarity range of the similarity interval. A greater image density indicates a larger quantity of images corresponding to each similarity unit in the similarity interval. The preset density is a value preset by a server, and can be set by the server according to a scenario requirement. After the similarity interval in which an image density is greater than a preset density is determined, similar to that in the manner (b1), if the calculation speed is not taken into account, all images in the determined similarity interval are determined as the trusted images of the target object, and if the calculation speed is taken into account, some images in the determined similarity interval are determined as the trusted images of the target object. An image within the similarity interval in which the image density is greater than the preset density is not necessarily the one most similar to the standard feature.

In the manner (b2), images distributed within the similarity interval in which the image density is greater than the preset density are mainly normal images of the target object. If the target object is a natural person who is used to laughing when taking photos, images distributed within the similarity interval in which the image density is greater than the preset density are mainly laughing images of the target object when statistics is conducted on the distribution data of the target object. By determining some or all of the images in the similarity interval in which the image density is greater than the preset density as the trusted images, the trusted images of the target object can be normal images thereof.

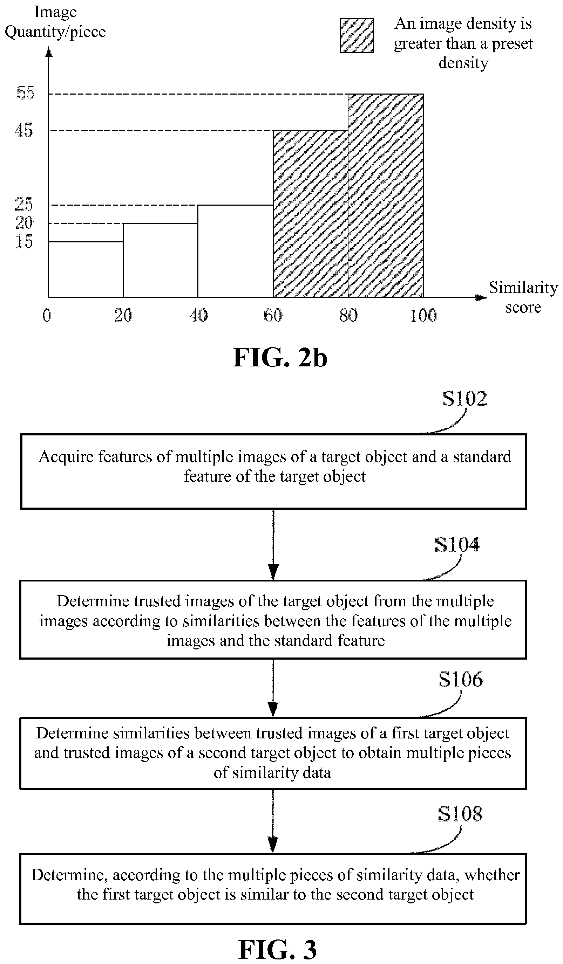

FIG. 2b is a schematic diagram of distribution of similarities between features of multiple images and a standard feature according to an embodiment of this application. As shown in FIG. 2b, a statistical distribution histogram is obtained according to distribution data of a similarity between a feature of each image of a target object and a standard feature of the target object. The histogram includes multiple similarity intervals, and the quantity of images corresponding to each similarity interval is marked. In the histogram, similarity intervals in which an image density is greater than a preset density include an interval having similarity scores between 60 and 80 and an interval having similarity scores between 80 and 100, which are diagonally drawn in the histogram. Then, some or all images corresponding to the two intervals are determined as trusted images of the target object.

It can be known by comparing the manner (b1) and manner (b2) that in the manner (b1), the trusted images of the target object are determined from the multiple images of the target object mainly based on a preset similarity threshold, while in the manner (b2), the trusted images of the target object are determined from the multiple images of the target object mainly based on distribution data of similarities. When the multiple images of the target object are all images of the target image itself, trusted images of the target object very close to the standard feature of the target object can be obtained simply and rapidly in the manner (b1). When a small amount of impurity images (such as meaningless images or images of other target objects) are mixed into the multiple images of the target object, the interference from the impurity images can be avoided in the manner (b2), and normal images of the target object are taken as trusted images of the target object. Those of ordinary skill in the art can select either of the manner (b1) and the manner (b2) according to an actual situation to determine the trusted images of the target object.

In the manner (b2), when the trusted images are determined based on similarity distribution, if an isolated image with a high similarity is determined in distribution data of the similarities, for example, a similarity between only one image and the standard feature is 98 points and the similarities between the remaining images and the standard feature is at most 90 points, the isolated image with a high similarity may overlap perfectly with the standard feature or may be an image with errors in calculation. In this situation, the image may be excluded in order to guarantee the accuracy of image selection, and definitely, the image may not be excluded, depending on a specific scenario.

It can be known from the process that when trusted images of a target object are determined from multiple images of the target object, low-quality images that are not close to the standard feature of the target object can be removed from the multiple images of the target object, thus obtaining high-quality images that can reflect the standard feature of the target object. As such, the accuracy of image processing can be improved when the trusted images of the target object are used for image processing.

FIG. 3 is a second schematic flowchart of an image processing method according to an embodiment of this application. With the method in FIG. 3, whether two target objects are similar can be compared on the basis of acquiring trusted images of the target objects. The method in FIG. 3 is preferably suitable for a scenario where the target object is a natural person. As shown in FIG. 3, the method further includes the following steps on the basis of FIG. 1.

In step S106, similarities between trusted images of a first target object and trusted images of a second target object are determined to obtain multiple pieces of similarity data.

In step S108, it is determined according to the multiple pieces of similarity data whether the first target object is similar to the second target object.

The target object in step S102 may include multiple target objects, which are respectively a first target object, a second target object, a third target object, and so on. Therefore, the trusted images of the first target object and the trusted images of the second target object can be determined respectively according to step S102 and step S104.

In step S106, the similarities between the trusted images of the first target object and the trusted images of the second target object are determined specifically by determining a similarity between each trusted image of the first target object and each trusted image of the second target object. The method of calculating the similarities is not specifically limited here, and can be selected as required. After the similarity between each trusted image of the first target object and each trusted image of the second target object has been calculated, the quantity of similarity data obtained by calculation is equal to the product of the quantity of the trusted images of the first target object and the quantity of the trusted images of the second target object.

In step S108, whether the first target object is similar to the second target object can be determined according to the multiple pieces of similarity data in the following manner (c1) or (c2):
(c1) determining that the first target object is similar to the second target object if an average value of the multiple pieces of similarity data is greater than a preset average threshold; or
(c2) determining that the first target object is similar to the second target object if distribution of the multiple pieces of similarity data meets a preset similarity distribution requirement.

In the manner (c1), an average value of the multiple pieces of similarity data is calculated. It is determined that the first target object is similar to the second target object if the average value of the multiple pieces of similarity data is greater than the preset average threshold. Otherwise, it is determined that the first target object is not similar to the second target object. The preset average threshold is a value preset by a server, and the preset manner can be set by the server according to an implementation scenario of this embodiment.

In the manner (c2), distribution of the multiple pieces of similarity data is calculated. The distribution can be represented in the form of a statistical distribution histogram. In the distribution, multiple similarity intervals are included and the quantity of image pairs corresponding to each similarity interval is marked.

In a specific embodiment, the preset similarity distribution requirement can be that a ratio of the quantity of image pairs having similarities greater than a certain value to the total number of image comparisons is greater than a preset ratio. In the distribution, if the ratio of the quantity of image pairs having similarities greater than a certain value to the total number of image comparisons is greater than the preset ratio, it is determined that the first target object is similar to the second target object. Otherwise, it is determined that the first target object is not similar to the second target object. If the ratio of the quantity of image pairs having similarities greater than 75 points to the total number of image comparisons is greater than 80%, it is determined that the first target object is similar to the second target object. Otherwise, it is determined that the first target object is not similar to the second target object. As images of the first target object and the second target object are compared in pairs, the quantity of image pairs having similarities greater than a certain value is determined, and the total number of image comparisons is equal to the product of the quantity of the trusted images of the first target object and the quantity of the trusted images of the second target object.

In another specific embodiment, the preset similarity distribution requirement can be that a similarity range of a similarity interval corresponding to the maximum quantity of images is within a preset similarity range. In the distribution, if the similarity range of the similarity interval corresponding to the maximum quantity of images is within the preset similarity range, it is determined that the first target object is similar to the second target object. Otherwise, it is determined that the first target object is not similar to the second target object. If the similarity range of the similarity interval corresponding to the maximum quantity of images is 80 points to 85 points, which is within the preset similarity range of 70 points to 90 points, it is determined that the first target object is similar to the second target object. Otherwise, it is determined that the first target object is not similar to the second target object.

By comparing the manner (c1) and the manner (c2), in the manner (c1), the preset average threshold can be used to simply and quickly determine whether the first target object is similar to the second target object; in the manner (c2), it can be determined according to distribution of the similarity data whether the first target object is similar to the second target object. When this embodiment is specifically implemented, either of the manner (c1) and the manner (c2) can be determined according to requirements of an implementation scenario to determine whether the first target object is similar to the second target object.

Considering that when the quantity of images of the first target object is small and/or the quantity of images of the second target object is small, the quantity of the multiple pieces of similarity data obtained in the above step S106 is small, which may affect the accuracy of judgment in step S108. Therefore, in this embodiment, step S108 of determining, according to the multiple pieces of similarity data, whether the first target object is similar to the second target object is specifically: determining whether the quantity of the multiple pieces of similarity data meets a preset quantity requirement, and if yes, determining, according to the multiple pieces of similarity data, whether the first target object is similar to the second target object. The accuracy of the judgment on the similarity between the first target object and the second target object can be guaranteed by determining that the quantity of the multiple pieces of similarity data obtained in step S106 meets the preset quantity requirement.

In a specific embodiment, if an algorithm of determining by the server according to the similarity data whether the first target object is similar to the second target object has high accuracy, whether the first target object is similar to the second target object can be determined directly according to the similarity data without determining whether the quantity of the multiple pieces of similarity data obtained in step S106 meets a preset quantity requirement. If the algorithm of determining by the server according to the similarity data whether the first target object is similar to the second target object has low accuracy, whether the quantity of the multiple pieces of similarity data obtained in step S106 meets a preset quantity requirement needs to be determined first, if yes, whether the first target object is similar to the second target object is determined according to the similarity data, and if no, the method process is ended.

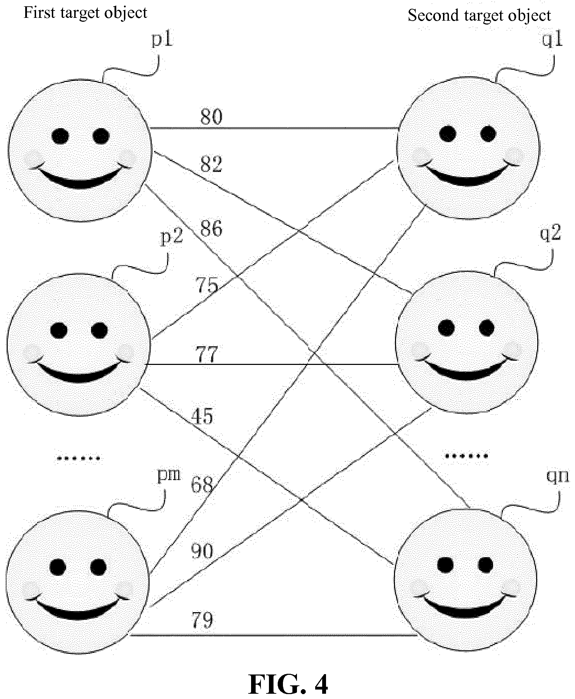

FIG. 4 is a schematic diagram of comparing according to trusted images whether a first target object is similar to a second target object according to an embodiment of this application. As shown in FIG. 4, the first target object includes m trusted pictures p1, p2, p3, ... and pm (three pictures are taken as examples for illustration in the figure), and the second target object includes n trusted pictures q1, q2, q3, ... and qn (three pictures are taken as examples for illustration in the figure). A similarity between each trusted picture of the first target object and each trusted picture of the second target object is calculated respectively to obtain multiple similarity scores. Some similarity scores are marked in the figure. Statistics is conducted on all the similarity scores to obtain an average score of 85, which is greater than a preset average threshold, and it is determined that the first target object is similar to the second target object.

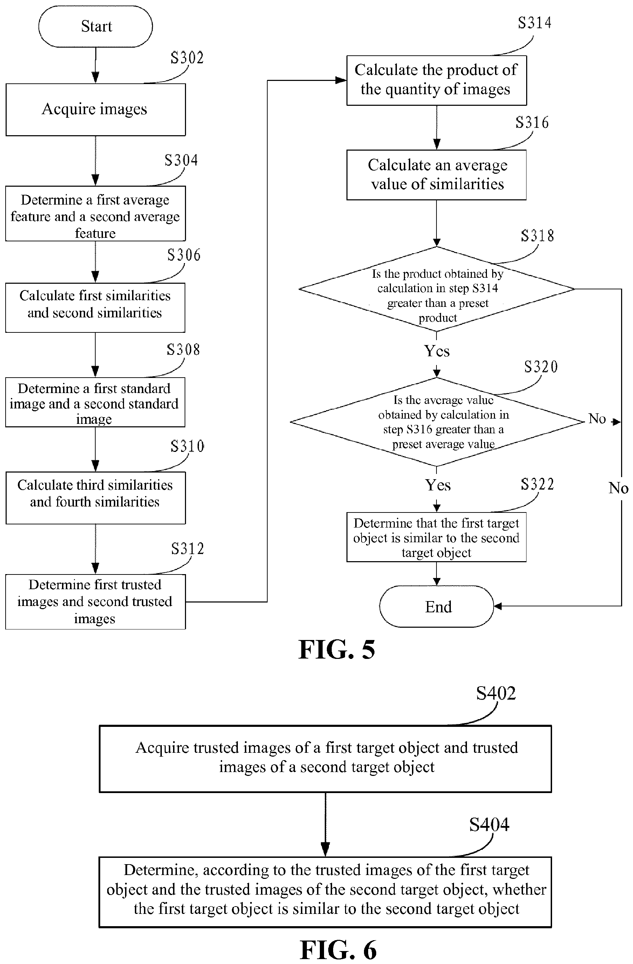

According to the method disclosed in the foregoing, another image processing method is provided in this embodiment, which includes a process of determining trusted images as well as a process of determining whether two target objects are similar. FIG. 5 is a third schematic flowchart of an image processing method according to an embodiment of this application. As shown in FIG. 5, the method includes the following steps.

In step S302, images are acquired. Multiple images of a first target object and multiple images of a second target object are acquired.

In step S304, a first average feature and a second average feature are determined. An average feature of the multiple images of the first target object is determined as the first average feature, and an average feature of the multiple images of the second target object is determined as the second average feature.

In step S306, first similarities and second similarities are calculated. A first similarity between a feature of each image of the first target object and the first average feature is calculated respectively in the multiple images of the first target object, and a second similarity between a feature of each image of the second target object and the second average feature is calculated respectively in the multiple images of the second target object.

In step S308, a first standard image and a second standard image are determined. An image having the largest first similarity is taken as the first standard image of the first target object, and an image having the largest second similarity is taken as the second standard image of the second target object.

In step S310, third similarities and fourth similarities are calculated. The third similarity between each image of the first target image and the first standard image is calculated respectively in the multiple images of the first target object, and the fourth similarity between each image of the second target image and the second standard image is calculated respectively in the multiple images of the second target object.

In step S312, first trusted images and second trusted images are determined. Image having the third similarities greater than a certain value are taken as the first trusted images of the first target object, and images having the fourth similarities greater than a certain value are taken as the second trusted images of the second target object.

In step S314, the product of the quantity of images is calculated. The product of the quantity of the first trusted images and the quantity of the second trusted images is calculated.

In step S316, an average value of similarities is calculated. A similarity between each first trusted image and each second trusted image is calculated respectively to obtain multiple pieces of similarity data, and an average value of the multiple pieces of similarity data is calculated.

In step S318, it is judged whether the product obtained by calculation in step S314 is greater than a preset product, if yes, step S320 is performed, and otherwise, the comparison is ended.

In step S320, it is judged whether the average value obtained by calculation in step S316 is greater than a preset average value, if yes, step S322 is performed, and otherwise, the comparison is ended.

In step S322, it is determined that the first target object is similar to the second target object.

In the image processing method shown in FIG. 1 to FIG. 5, when a similarity is calculated, such as a similarity between each image and the average feature, a similarity between each image and the standard image, or a similarity between a trusted image of the first target object and a trusted image of the second target object, the similarity calculation method is not limited. The Euclidean distance or cosine distance between feature vectors can be calculated to calculate the similarity. When the target object is a natural person, an Eigenface-based comparison method can also be adopted, and so on, as long as there are indicators for quantifying similarities between features. Principal component analysis (PCA), Local Face Analysis, Neural Networks and so on can be used when the Euclidean distance or cosine distance is calculated.

In this embodiment, the target object can be a natural person. With the method in this embodiment, low-quality images of the natural person can be excluded from base images of the natural person reserved in the system to select trusted images of the natural person. The trusted images of the natural person can be images with proper light, correct facial position and clear image without heavy makeup and exaggerated accessories. Facial features of the natural person can be reflected through the trusted images. With the method in this embodiment, whether two natural persons are similar can further be judged based on trusted images of the two natural persons. The method in this embodiment is simple in process, accurate in effect, can be widely used in the field of face recognition, especially in the screening of identical twins, target person positioning and other fields, and has potential social values, such as identifying identical twins who both have a history of face collection, looking for abducted children or tracking fugitives who change their names.

Further, based on the methods in FIG. 1 to FIG. 5, an image processing method is further provided in an embodiment of this application. FIG. 6 is a fourth schematic flowchart of an image processing method according to an embodiment of this application. The method is performed by a server. For the method in FIG. 6, the differences between it and the method in FIG. 1 to FIG. 5 are highlighted here. Reference can be made to the foregoing description in FIG. 1 to FIG. 5 for identical parts. As shown in FIG. 6, the method at least includes the following steps.

In step S402, trusted images of a first target object and trusted images of a second target object are acquired.

In step S404, it is determined, according to the trusted images of the first target object and the trusted images of the second target object, whether the first target object is similar to the second target object.

The trusted images of the first target object are images determined from multiple images of the first target object, and similarities between features of the trusted images of the first target object and a standard feature of the first target object meet a first preset similarity requirement; the trusted images of the second target object are images determined from multiple images of the second target object, and similarities between features of the trusted images of the second target object and a standard feature of the second target object meet a second preset similarity requirement.

With the image processing method in this embodiment, the trusted images of the first target object are images selected from the multiple images of the first target object, and the similarities between the features of the images and the standard feature of the first target object meet the first preset similarity requirement; the trusted images of the second target object are images selected from the multiple images of the second target object, and the similarities between the features of the images and the standard feature of the second target object meet the second preset similarity requirement. Therefore, according to the image processing method in this embodiment, images more similar to a standard feature of a target object and capable of reflecting the standard feature of the target object can be determined from multiple images of the target object based on the standard feature of the target object, so that all the selected images are suitable for image processing, thus improving an image processing effect. Moreover, according to the method in this embodiment, it is judged, based on trusted images of the first target object and trusted images of the second target object, whether the first target object is similar to the second target object. Therefore, the image processing method in this embodiment has a good image processing effect and an accurate judgment result, and can accurately determine whether the first target object is similar to the second target object.

It can be known according to the description about FIG. 1 to FIG. 5 that in this embodiment, the standard feature of the first target object is an average feature of multiple images of the first target object; or the standard feature of the first target object is a feature in features of the multiple images of the first target object that is most similar to the average feature of the multiple images of the first target object. The standard feature of the second target object is an average feature of multiple images of the second target object; or the standard feature of the second target object is a feature in features of the multiple images of the second target object that is most similar to the average feature of the multiple images of the second target object. The first preset similarity requirement may be identical to or different from the second preset similarity requirement.

Considering that the accuracy of judging whether the first target object and the second target object are similar can be guaranteed by adopting a unified standard to determine the trusted images of the first target object and the trusted images of the second target object, preferably, the standard feature of the first target object and the standard feature of the second target object are determined in the same manner. They both are an average feature of multiple images or both are a feature in features of the multiple images that is most similar to an average feature of the multiple images, and the first preset similarity requirement is identical to the second preset similarity requirement.

The specific explanations to the first preset similarity requirement and the second preset similarity requirement are in line with the descriptions in FIG. 1 to FIG. 5. Reference can also be made to the descriptions in FIG. 1 to FIG. 5 for the specific process of acquiring trusted images of the first target object and trusted images of the second target object in the step S402, which is not elaborated here.

In the step S404, it is determined, according to the trusted images of the first target object and the trusted images of the second target object, whether the first target object is similar to the second target object specifically in the following manner (d1) or (d2):
(d1) determining that the first target object is similar to the second target object if an average value of multiple pieces of similarity data between the trusted images of the first target object and the trusted images of the second target object is greater than a preset average threshold; or
(d2) determining that the first target object is similar to the second target object if distribution of multiple pieces of similarity data between the trusted images of the first target object and the trusted images of the second target object meets a preset similarity distribution requirement.

Reference can be made to the manners (c1) and (c2) for the specific explanations to the manners (d1) and (d2), which are not elaborated here.

In an application scenario, it is necessary to search a database of target objects for two target objects with similar features, such as two natural persons with similar appearance. In this case, in this embodiment, the first target object is any target object in the database of target objects, and the second target object is any target object in the database of target objects other than the first target object, thus finding out two target objects with similar features in the database.

In another application scenario, it is necessary to search a database for a target object similar to a specified target object, such as another natural person similar in appearance to a specified natural person. In this case, in this embodiment, the first target object is a target object specified by a user, and the second target object is any target object in the database of target objects, thus finding out a target object similar to the specified target object in the database.

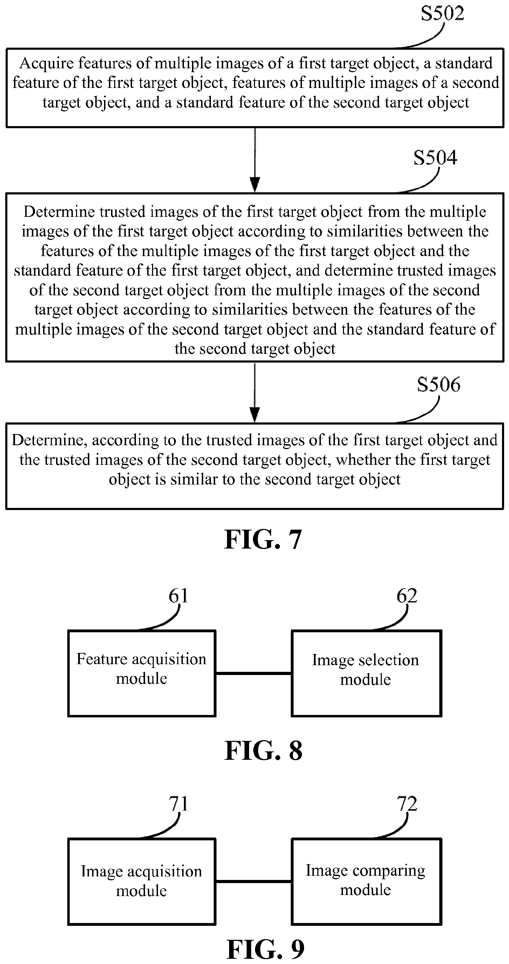

Further, based on the methods in FIG. 1 to FIG. 5, an image processing method is further provided in an embodiment of this application. FIG. 7 is a fifth schematic flowchart of an image processing method according to an embodiment of this application. The method is performed by a server. For the method in FIG. 7, the differences between it and the method in FIG. 1 to FIG. 5 are highlighted here. Reference can be made to the foregoing description in FIG. 1 to FIG. 5 for identical parts. As shown in FIG. 7, the method at least includes the following steps.

In step S502, features of multiple images of a first target object, a standard feature of the first target object, features of multiple images of a second target object, and a standard feature of the second target object are acquired.

In step S504, trusted images of the first target object are determined from the multiple images of the first target object according to similarities between the features of the multiple images of the first target object and the standard feature of the first target object, and trusted images of the second target object are determined from the multiple images of the second target object according to similarities between the features of the multiple images of the second target object and the standard feature of the second target object, wherein similarities between features of the trusted images of the first target object and the standard feature thereof meet a first preset similarity requirement, and similarities between features of the trusted images of the second target object and the standard feature thereof meet a second preset similarity requirement.

In step S506, it is determined, according to the trusted images of the first target object and the trusted images of the second target object, whether the first target object is similar to the second target object.

According to the image processing method in this embodiment, features of multiple images of a target object and a standard feature of the target object are acquired first, then trusted images of the target object are determined in the multiple images according to similarities between the features of the multiple images and the standard feature, wherein similarities between features of the trusted images and the standard feature meet a preset similarity requirement, and finally it is judged, according to trusted images of two target objects, whether the two target objects are similar to each other. According to the image processing method in this embodiment, trusted images more similar to a standard feature of a target object and capable of reflecting the standard feature of the target object can be determined from multiple images of the target object based on the standard feature of the target object, so that all the selected trusted images are suitable for image processing, thus improving an image processing effect. It is judged, based on the trusted images of the first target object and trusted images of the second target object, whether the first target object is similar to the second target object, which can improve the accuracy of judgment on the similarity between the two target objects, thus accurately judging whether the two target objects are similar to each other.

Reference can be made to the descriptions about step S102 and step S104 in FIG. 1 and FIG. 2 for the specific processes of step S502 and step S504, and reference can be made to the description about step S404 in FIG. 6 for the specific process of step S506, which are not elaborated here.

Reference can be made to the descriptions about FIG. 1 to FIG. 6 for the specific explanations to the standard feature in this embodiment. In this embodiment, the first preset similarity requirement is identical to the second preset similarity requirement, or the first preset similarity requirement is different from the second preset similarity requirement. Considering that the accuracy of judging whether the first target object is similar to the second target object can be guaranteed by adopting a unified standard to determine the trusted images of the first target object and the trusted images of the second target object, preferably, the standard feature of the first target object and the standard feature of the second target object are determined in the same manner, they both are an average feature of multiple images or both are a feature in features of the multiple images that is most similar to an average feature of the multiple images, and the first preset similarity requirement is identical to the second preset similarity requirement.

To sum up, according to the method shown in FIG. 1 to FIG. 7 in this embodiment, trusted images of a target object can be determined, and it can be determined based on the trusted images of the target objects whether two target objects are similar to each other. The method is simple in the judgment process and accurate in the judgment result, and can be widely used in face recognition, twin screening, positioning of target persons and other fields.

Further, based on the methods shown in FIG. 1 to FIG. 7, an image processing apparatus is provided in an embodiment of this application. FIG. 8 is a first schematic diagram of module composition of an image processing apparatus according to an embodiment of this application. As shown in FIG. 8, the apparatus includes:
a feature acquisition module 61 configured to acquire features of multiple images of a target object and a standard feature of the target object; and
an image selection module 62 configured to determine trusted images of the target object from the multiple images according to similarities between the features of the multiple images and the standard feature, wherein similarities between features of the trusted images and the standard feature meet a preset similarity requirement.

In this embodiment, the feature acquisition module 61 is specifically configured to acquire an average feature of the multiple images, and take the average feature of the multiple images as the standard feature of the target object; or acquire an average feature of the multiple images, and take a feature in the features of the multiple images that is most similar to the average feature as the standard feature of the target object.

In this embodiment, the image selection module 62 is specifically configured to take some or all of images among the multiple images having similarities between features thereof and the standard feature greater than a preset similarity threshold as the trusted images of the target object; or determine distribution data of the similarities between the features of the multiple images and the standard feature, determine a similarity interval in the distribution data in which an image density is greater than a preset density, and take some or all images corresponding to the determined similarity interval as the trusted images of the target object.

In this embodiment, the apparatus further includes:
a similarity determining module configured to determine similarities between trusted images of a first target object and trusted images of a second target object to obtain multiple pieces of similarity data; and
a similarity judging module configured to determine, according to the multiple pieces of similarity data, whether the first target object is similar to the second target object.

In this embodiment, the similarity judging module is specifically configured to determine that the first target object is similar to the second target object if an average value of the multiple pieces of similarity data is greater than a preset average threshold; or determine that the first target object is similar to the second target object if distribution of the multiple pieces of similarity data meets a preset similarity distribution requirement.

In this embodiment, the similarity judging module is specifically configured to determine whether the quantity of the multiple pieces of similarity data meets a preset quantity requirement, and if yes, determine, according to the multiple pieces of similarity data, whether the first target object is similar to the second target object.

The image processing apparatus in this embodiment can first acquire features of multiple images of a target object and a standard feature of the target object, and then determines trusted images of the target object from the multiple images according to similarities between features of the multiple images and the standard feature, wherein similarities between features of the trusted images and the standard feature meet a preset similarity requirement. It is thus clear that the image processing apparatus in this embodiment can determine, based on the standard feature of the target object, the trusted images more similar to the standard feature of the target object and capable of reflecting the standard feature of the target object from the multiple images of the target object, so that all the selected trusted images are suitable for image processing, thus improving an image processing effect.

Further, based on the methods shown in FIG. 1 to FIG. 7, another image processing apparatus is further provided in an embodiment of this application. FIG. 9 is a second schematic diagram of module composition of an image processing apparatus according to an embodiment of this application. As shown in FIG. 9, the apparatus includes:
an image acquisition module 71 configured to acquire trusted images of a first target object and trusted images of a second target object; and
an image comparing module 72 configured to determine, according to the trusted images of the first target object and the trusted images of the second target object, whether the first target object is similar to the second target object,
wherein the trusted images of the first target object are images determined from multiple images of the first target object, and similarities between features of the trusted images of the first target object and a standard feature of the first target object meet a first preset similarity requirement; the trusted images of the second target object are images determined from multiple images of the second target object, and similarities between features of the trusted images of the second target object and a standard feature of the second target object meet a second preset similarity requirement.

In this embodiment, the standard feature of the first target object is an average feature of multiple images of the first target object; or the standard feature of the first target object is a feature in features of the multiple images of the first target object that is most similar to the average feature of the multiple images of the first target object. The standard feature of the second target object is an average feature of multiple images of the second target object; or the standard feature of the second target object is a feature in features of the multiple images of the second target object that is most similar to the average feature of the multiple images of the second target object.

In this embodiment, the image comparing module 72 is specifically configured to determine that the first target object is similar to the second target object if an average value of multiple pieces of similarity data between the trusted images of the first target object and the trusted images of the second target object is greater than a preset average threshold; or determine that the first target object is similar to the second target object if distribution of multiple pieces of similarity data between the trusted images of the first target object and the trusted images of the second target object meets a preset similarity distribution requirement.

In this embodiment, the first target object is any target object in a database of target objects; and the second target object is any target object in the database other than the first target object; or the first target object is a target object specified by a user, and the second target object is any target object in a database of target objects.

According to the image processing apparatus in this embodiment, the trusted images of the first target object are images selected from multiple images of the first target object, and similarities between features of the images and a standard feature of the first target object meet a first preset similarity requirement; and the trusted images of the second target object are images selected from multiple images of the second target object, and similarities between features of the images and a standard feature of the second target object meet a second preset similarity requirement. Therefore, according to the image processing apparatus in this embodiment, images more similar to a standard feature of a target object and capable of reflecting the standard feature of the target object can be determined from multiple images of the target object based on the standard feature of the target object, so that all the selected images are suitable for image processing, thus improving an image processing effect. Moreover, the apparatus in this embodiment judges, based on trusted images of the first target object and trusted images of the second target object, whether the first target object is similar to the second target object, and therefore, the image processing apparatus in this embodiment has a good image processing effect and an accurate judgment result, and can accurately determine whether the first target object is similar to the second target object.

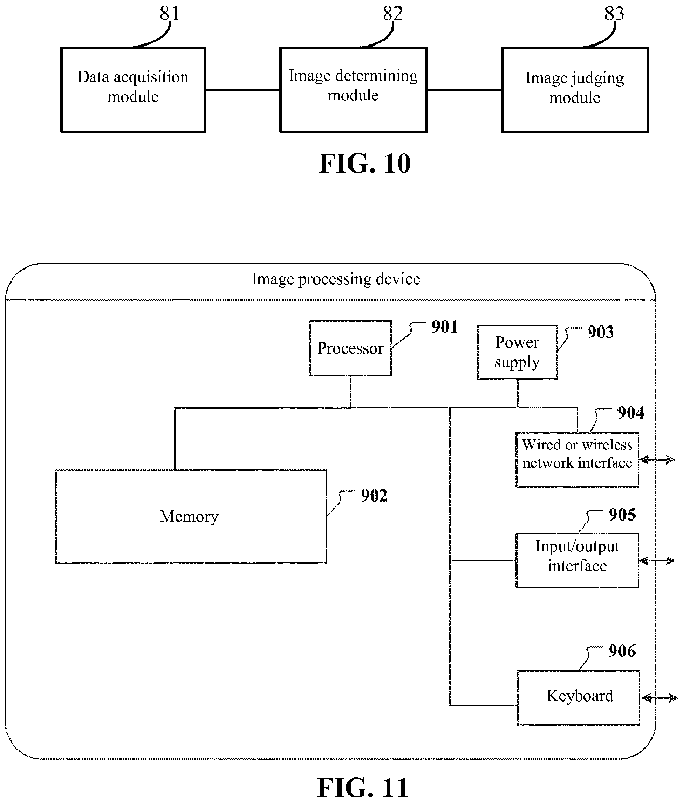

Further, based on the methods shown in FIG. 1 to FIG. 7, a yet another image processing apparatus is further provided in an embodiment of this application. FIG. 10 is a third schematic diagram of module composition of an image processing apparatus according to an embodiment of this application. As shown in FIG. 10, the apparatus includes:
a data acquisition module 81 configured to acquire features of multiple images of a first target object, a standard feature of the first target object, features of multiple images of a second target object, and a standard feature of the second target object;
an image determining module 82 configured to determine trusted images of the first target object from the multiple images of the first target object according to similarities between the features of the multiple images of the first target object and the standard feature of the first target object, and determine trusted images of the second target object from the multiple images of the second target object according to similarities between the features of the multiple images of the second target object and the standard feature of the second target object, wherein similarities between features of the trusted images of the first target object and the standard feature thereof meet a first preset similarity requirement, and similarities between features of the trusted images of the second target object and the standard feature thereof meet a second preset similarity requirement; and
an image judging module 83 configured to determine, according to the trusted images of the first target object and the trusted images of the second target object, whether the first target object is similar to the second target object.

In this embodiment, the first preset similarity requirement is identical to the second preset similarity requirement, or the first preset similarity requirement is different from the second preset similarity requirement.

The image processing apparatus in this embodiment first acquires features of multiple images of a target object and a standard feature of the target object, then determines trusted images of the target object from the multiple images according to similarities between the features of the multiple images and the standard feature, wherein similarities between features of the trusted images and the standard feature meet a preset similarity requirement, and finally judges, according to trusted images of two target objects, whether the two target objects are similar to each other. According to the image processing apparatus in this embodiment, trusted images more similar to a standard feature of a target object and capable of reflecting the standard feature of the target object can be determined from multiple images of the target object based on the standard feature of the target object, so that all the selected trusted images are suitable for image processing, thus improving an image processing effect. It is judged, based on trusted images of the first target object and trusted images of the second target object, whether the first target object is similar to the second target object, which can improve the accuracy of judgment on the similarity between the two target objects, thus accurately judging whether the two target objects are similar to each other.

Further, based on the methods shown in FIG. 1 to FIG. 7, an image processing device is further provided in an embodiment of this application, as shown in FIG. 11.

The image processing device may vary greatly depending on configuration or performance, and can include one or more processors 901 and a memory 902. One or more storage applications or data can be stored in the memory 902. The memory 902 can be either transient or persistent. An application stored in the memory 902 can include one or more modules (not shown in the figure), each of which can include a series of computer executable instructions for the image processing device. Furthermore, the processor 901 can be configured to communicate with the memory 902 and execute the series of computer executable instructions in the memory 902 on the image processing device. The image processing device can further include one or more power supplies 903, one or more wired or wireless network interfaces 904, one or more input/output interfaces 905, one or more keyboards 906, and so on.

In a specific embodiment, the image processing device includes a memory, and one or more programs. The one or more programs are stored in the memory, and can include one or more modules, each of which can include a series of computer executable instructions for the image processing device and is configured to execute the one or more programs by one or more processors to perform the following computer executable instructions:
acquiring features of multiple images of a target object and a standard feature of the target object; and
determining trusted images of the target object from the multiple images according to similarities between the features of the multiple images and the standard feature, wherein similarities between features of the trusted images and the standard feature meet a preset similarity requirement.

Optionally, when the computer executable instructions are executed, the acquiring a standard feature of a target object includes: acquiring an average feature of the multiple images, and taking the average feature of the multiple images as the standard feature of the target object; or acquiring an average feature of the multiple images, and taking a feature in the features of the multiple images that is most similar to the average feature as the standard feature of the target object.

Optionally, when the computer executable instructions are executed, the determining trusted images of the target object from the multiple images according to similarities between the features of the multiple images and the standard feature includes: taking some or all of images among the multiple images having similarities between features thereof and the standard feature greater than a preset similarity threshold as the trusted images of the target object; or determining distribution data of the similarities between the features of the multiple images and the standard feature, determining a similarity interval in the distribution data in which an image density is greater than a preset density, and taking some or all images corresponding to the determined similarity interval as the trusted images of the target object.

Optionally, when the computer executable instructions are executed, the processor can be further configured to determine similarities between trusted images of a first target object and trusted images of a second target object to obtain multiple pieces of similarity data; and determine, according to the multiple pieces of similarity data, whether the first target object is similar to the second target object.

Optionally, when the computer executable instructions are executed, the determining, according to the multiple pieces of similarity data, whether the first target object is similar to the second target object includes: determining that the first target object is similar to the second target object if an average value of the multiple pieces of similarity data is greater than a preset average threshold; or determining that the first target object is similar to the second target object if distribution of the multiple pieces of similarity data meets a preset similarity distribution requirement.

Optionally, when the computer executable instructions are executed, the determining, according to the multiple pieces of similarity data, whether the first target object is similar to the second target object includes: determining whether the quantity of the multiple pieces of similarity data meets a preset quantity requirement, and if yes, determining, according to the multiple pieces of similarity data, whether the first target object is similar to the second target object.

The image processing device in this embodiment first acquires features of multiple images of a target object and a standard feature of the target object, and then determines trusted images of the target object from the multiple images according to similarities between features of the multiple images and the standard feature, wherein similarities between features of the trusted images and the standard feature meet a preset similarity requirement. It is thus clear that the image processing device in this embodiment can determine, based on a standard feature of a target object, trusted images more similar to the standard feature of the target object and capable of reflecting the standard feature of the target object from multiple images of the target object, so that all the selected trusted images are suitable for image processing, thus improving an image processing effect.

In another specific embodiment, the image processing device includes a memory, and one or more programs. The one or more programs are stored in the memory, and can include one or more modules, each of which can include a series of computer executable instructions for the image processing device and is configured to execute the one or more programs by one or more processors to perform the following computer executable instructions:
acquiring trusted images of a first target object and trusted images of a second target object; and
determining, according to the trusted images of the first target object and the trusted images of the second target object, whether the first target object is similar to the second target object,
wherein the trusted images of the first target object are images determined from multiple images of the first target object, and similarities between features of the trusted images of the first target object and a standard feature of the first target object meet a first preset similarity requirement; the trusted images of the second target object are images determined from multiple images of the second target object, and similarities between features of the trusted images of the second target object and a standard feature of the second target object meet a second preset similarity requirement.

Optionally, the standard feature of the first target object is an average feature of the multiple images of the first target object; or the standard feature of the first target object is a feature in features of the multiple images of the first target object that is most similar to an average feature of the multiple images of the first target object; and the standard feature of the second target object is an average feature of the multiple images of the second target object; or the standard feature of the second target object is a feature in features of the multiple images of the second target object that is most similar to an average feature of the multiple images of the second target object.

Optionally, when the computer executable instructions are executed, the determining, according to the trusted images of the first target object and the trusted images of the second target object, whether the first target object is similar to the second target object includes: determining that the first target object is similar to the second target object if an average value of multiple pieces of similarity data between the trusted images of the first target object and the trusted images of the second target object is greater than a preset average threshold; or determining that the first target object is similar to the second target object if distribution of multiple pieces of similarity data between the trusted images of the first target object and the trusted images of the second target object meets a preset similarity distribution requirement.

Optionally, the first target object is any target object in a database of target objects; and the second target object is any target object in the database other than the first target object; or the first target object is a target object specified by a user, and the second target object is any target object in a database of target objects.

According to the image processing device in this embodiment, the trusted images of the first target object are images selected from multiple images of the first target object, and similarities between features of the images and a standard feature of the first target object meet a first preset similarity requirement; and the trusted images of the second target object are images selected from multiple images of the second target object, and similarities between features of the images and a standard feature of the second target object meet a second preset similarity requirement. Therefore, according to the image processing device in this embodiment, images more similar to a standard feature of a target object and capable of reflecting the standard feature of the target object can be determined from multiple images of the target object based on the standard feature of the target object, so that all the selected images are suitable for image processing, thus improving an image processing effect. Moreover, the device in this embodiment judges, based on trusted images of the first target object and trusted images of the second target object, whether the first target object is similar to the second target object, and therefore, the image processing device in this embodiment has a good image processing effect and an accurate judgment result, and can accurately determine whether the first target object is similar to the second target object.

In a yet another specific embodiment, the image processing device includes a memory, and one or more programs. The one or more programs are stored in the memory, and can include one or more modules, each of which can include a series of computer executable instructions for the image processing device and is configured to execute the one or more programs by one or more processors to perform the following computer executable instructions:
acquiring features of multiple images of a first target object, a standard feature of the first target object, features of multiple images of a second target object, and a standard feature of the second target object;
determining trusted images of the first target object from the multiple images of the first target object according to similarities between the features of the multiple images of the first target object and the standard feature of the first target object, and determining trusted images of the second target object from the multiple images of the second target object according to similarities between the features of the multiple images of the second target object and the standard feature of the second target object, wherein similarities between features of the trusted images of the first target object and the standard feature thereof meet a first preset similarity requirement, and similarities between features of the trusted images of the second target object and the standard feature thereof meet a second preset similarity requirement; and
determining, according to the trusted images of the first target object and the trusted images of the second target object, whether the first target object is similar to the second target object.

Optionally, the first preset similarity requirement is identical to the second preset similarity requirement, or the first preset similarity requirement is different from the second preset similarity requirement.

The image processing device in this embodiment first acquires features of multiple images of a target object and a standard feature of the target object, then determines trusted images of the target object from the multiple images according to similarities between the features of the multiple images and the standard feature, wherein similarities between features of the trusted images and the standard feature meet a preset similarity requirement, and finally judges, according to trusted images of two target objects, whether the two target objects are similar to each other. According to the image processing device in this embodiment, trusted images more similar to a standard feature of a target object and capable of reflecting the standard feature of the target object can be determined from multiple images of the target object based on the standard feature of the target object, so that all the selected trusted images are suitable for image processing, thus improving an image processing effect. It is judged, based on trusted images of the first target object and trusted images of the second target object, whether the first target object is similar to the second target object, which can improve the accuracy of judgment on the similarity between the two target objects, thus accurately judging whether the two target objects are similar to each other.

Further, based on the methods shown in FIG. 1 to FIG. 7, a storage medium configured to store computer executable instructions is further provided in an embodiment of this embodiment. In a specific embodiment, the storage medium can be a USB flash disk, an optical disc, a hard disk, and so on. When the computer executable instructions stored in the storage medium are executed by a processor, the following process can be implemented:
acquiring features of multiple images of a target object and a standard feature of the target object; and
determining trusted images of the target object from the multiple images according to similarities between the features of the multiple images and the standard feature, wherein similarities between features of the trusted images and the standard feature meet a preset similarity requirement.

In this embodiment, the acquiring a standard feature of the target object includes: acquiring an average feature of the multiple images, and taking the average feature of the multiple images as the standard feature of the target object; or acquiring an average feature of the multiple images, and taking a feature in the features of the multiple images that is most similar to the average feature as the standard feature of the target object.

In this embodiment, the determining trusted images of the target object from the multiple images according to similarities between the features of the multiple images and the standard feature includes: taking some or all of images among the multiple images having similarities between features thereof and the standard feature greater than a preset similarity threshold as the trusted images of the target object; or determining distribution data of the similarities between the features of the multiple images and the standard feature, determining a similarity interval in the distribution data in which an image density is greater than a preset density, and taking some or all images corresponding to the determined similarity interval as the trusted images of the target object.

The process in this embodiment further includes: determining similarities between trusted images of a first target object and trusted images of a second target object to obtain multiple pieces of similarity data; and determining, according to the multiple pieces of similarity data, whether the first target object is similar to the second target object.

In this embodiment, the determining, according to the multiple pieces of similarity data, whether the first target object is similar to the second target object includes: determining that the first target object is similar to the second target object if an average value of the multiple pieces of similarity data is greater than a preset average threshold; or determining that the first target object is similar to the second target object if distribution of the multiple pieces of similarity data meets a preset similarity distribution requirement.

In this embodiment, the determining, according to the multiple pieces of similarity data, whether the first target object is similar to the second target object includes: determining whether the quantity of the multiple pieces of similarity data meets a preset quantity requirement, and if yes, determining, according to the multiple pieces of similarity data, whether the first target object is similar to the second target object.

When the executable instructions in the storage medium according to this embodiment are executed, features of multiple images of a target object and a standard feature of the target object are acquired first, and then trusted images of the target object are determined from the multiple images according to similarities between the features of the multiple images and the standard feature, wherein similarities between features of the trusted images and the standard feature meet a preset similarity requirement. As can be seen, when the executable instructions in the storage medium according to this embodiment are executed, images more similar to a standard feature of a target object and capable of reflecting the standard feature of the target object in multiple images of the target object can be determined based on the standard feature of the target object, so that all the selected trusted images are suitable for image processing, thus improving an image processing effect.

In another specific embodiment, the storage memory can be a USB flash disk, an optical disc, a hard disk, and so on. When the computer executable instructions stored in the storage memory are executed by a processor, the following process can be implemented:
acquiring trusted images of a first target object and trusted images of a second target object; and
determining, according to the trusted images of the first target object and the trusted images of the second target object, whether the first target object is similar to the second target object,
wherein the trusted images of the first target object are images determined from multiple images of the first target object, and similarities between features of the trusted images of the first target object and a standard feature of the first target object meet a first preset similarity requirement; the trusted images of the second target object are images determined from multiple images of the second target object, and similarities between features of the trusted images of the second target object and a standard feature of the second target object meet a second preset similarity requirement.

The standard feature of the first target object is an average feature of the multiple images of the first target object; or the standard feature of the first target object is a feature in features of the multiple images of the first target object that is most similar to an average feature of the multiple images of the first target object; and the standard feature of the second target object is an average feature of the multiple images of the second target object; or the standard feature of the second target object is a feature in features of the multiple images of the second target object that is most similar to an average feature of the multiple images of the second target object.

The determining, according to the trusted images of the first target object and the trusted images of the second target object, whether the first target object is similar to the second target object includes: determining that the first target object is similar to the second target object if an average value of multiple pieces of similarity data between the trusted images of the first target object and the trusted images of the second target object is greater than a preset average threshold; or determining that the first target object is similar to the second target object if distribution of multiple pieces of similarity data between the trusted images of the first target object and the trusted images of the second target object meets a preset similarity distribution requirement.

The first target object is any target object in a database of target objects; and the second target object is any target object in the database other than the first target object; or the first target object is a target object specified by a user, and the second target object is any target object in a database of target objects.

When the executable instructions in the storage medium according to this embodiment are executed, the trusted images of the first target object are images selected from multiple images of the first target object, and similarities between features of the images and a standard feature of the first target object meet a first preset similarity requirement; and the trusted images of the second target object are images selected from multiple images of the second target object, and similarities between features of the images and a standard feature of the second target object meet a second preset similarity requirement. Therefore, when the executable instructions in the storage medium according to this embodiment are executed, images more similar to a standard feature of a target object and capable of reflecting the standard feature of the target object can be determined from multiple images of the target object based on the standard feature of the target object, so that all the selected images are suitable for image processing, thus improving an image processing effect. Moreover, when the executable instructions in the storage medium according to this embodiment are executed, it is judged, based on trusted images of the first target object and trusted images of the second target object, whether the first target object is similar to the second target object, therefore when the executable instructions in the storage medium according to this embodiment are executed, the image processing effect is good, the judgment result is accurate, and it can be accurately determined whether the first target object is similar to the second target object.

In a yet another specific embodiment, the storage medium can be a USB flash disk, an optical disc, a hard disk, and so on. When computer executable instructions stored in the storage medium are executed by a processor, the following process can be implemented:
acquiring features of multiple images of a first target object, a standard feature of the first target object, features of multiple images of a second target object, and a standard feature of the second target object;
determining trusted images of the first target object from the multiple images of the first target object according to similarities between the features of the multiple images of the first target object and the standard feature of the first target object, and determining trusted images of the second target object from the multiple images of the second target object according to similarities between the features of the multiple images of the second target object and the standard feature of the second target object, wherein similarities between features of the trusted images of the first target object and the standard feature thereof meet a first preset similarity requirement, and similarities between features of the trusted images of the second target object and the standard feature thereof meet a second preset similarity requirement; and
determining, according to the trusted images of the first target object and the trusted images of the second target object, whether the first target object is similar to the second target object.

The first preset similarity requirement is identical to the second preset similarity requirement, or the first preset similarity requirement is different from the second preset similarity requirement.

When the executable instructions in the storage medium according to this embodiment are executed, features of multiple images of a target object and a standard feature of the target object are acquired first, then trusted images of the target object are determined from the multiple images according to similarities between the features of the multiple images and the standard feature, wherein similarities between features of the trusted images and the standard feature meet a preset similarity requirement, and finally it is judged, according to trusted images of two target objects, whether the two target objects are similar to each other. When the executable instructions in the storage medium according to this embodiment are executed, trusted images more similar to a standard feature of a target object and capable of reflecting the standard feature of the target object can be determined from multiple images of the target object based on the standard feature of the target object, so that all the selected trusted images are suitable for image processing, thus improving an image processing effect. It is judged, based on trusted images of the first target object and trusted images of the second target object, whether the first target object is similar to the second target object, which can improve the accuracy of judgment on the similarity between the two target objects, thus accurately judging whether the two target objects are similar to each other.

In the 1990s, an improvement on a technology may be obviously distinguished as an improvement on hardware (for example, an improvement on a circuit structure such as a diode, a transistor, and a switch) or an improvement on software (an improvement on a method procedure). However, with the development of technologies, improvements of many method procedures at present may be considered as direct improvements on hardware circuit structures. Almost all designers program the improved method procedures into hardware circuits to obtain corresponding hardware circuit structures. Therefore, it cannot be assumed that the improvement of a method procedure cannot be implemented by using a hardware entity module. For example, a Programmable Logic Device (PLD) (for example, a Field Programmable Gate Array (FPGA)) is such an integrated circuit, and logic functions thereof are determined by a user programming devices. Designers program by themselves to "integrate" a digital system into a PLD, without having a chip manufacturer to design and manufacture a dedicated integrated circuit chip. Moreover, at present, the programming is mostly implemented by using "logic compiler" software, instead of manually manufacturing an integrated circuit chip. The software is similar to a software complier for developing and writing a program, and original codes before compiling also need to be written in a specific programming language, which is referred to as a Hardware Description Language (HDL). There are not just one, but many types of HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL), among which Very-High-Speed Integrated Circuit Hardware Description Language (VHDL) and Verilog are most commonly used now. Those skilled in the art also should know that a hardware circuit for implementing the logic method procedure may be easily obtained only by slightly logically programming the method procedure using the above several hardware description languages and programming the method procedure into an integrated circuit.

A controller may be implemented in any suitable manner. For example, the controller may be in the form of a microprocessor or a processor and a computer readable medium storing computer readable program codes (for example, software or firmware) executable by the (micro)processor, a logic gate, a switch, an Application Specific Integrated Circuit (ASIC), a programmable logic controller, and an embedded micro-controller. Examples of the controller include, but are not limited to, the following micro-controllers: ARC 625D, Atmel AT91SAM, Microchip PIC18F26K20, and Silicone Labs C8051F320. A memory controller may also be implemented as a part of control logic of a memory. Those skilled in the art also know that, in addition to implementing the controller by using pure computer readable program codes, the method steps may be logically programmed to enable the controller to implement the same function in the form of a logic gate, a switch, an application specific integrated circuit, a programmable logic controller and an embedded microcontroller. Therefore, such a controller may be considered as a hardware component, and apparatuses included therein and configured to implement various functions may also be considered as structures inside the hardware component. Alternatively, further, the apparatuses configured to implement various functions may be considered as both software modules for implementing the method and structures inside the hardware component.

The system, apparatus, module or unit illustrated in the foregoing embodiments can be implemented by a computer chip or an entity, or implemented by a product having a specific function. A typical implementation device is a computer. For example, the computer may be a personal computer, a laptop computer, a cellular phone, a camera phone, a smart phone, a personal digital assistant, a media player, a navigation device, an email device, a game console, a tablet computer, a wearable device, or a combination of any of these devices.

For ease of description, the apparatus is divided into various units based on functions, and the units are described separately. Definitely, in an implementation of this specification, functions of various units can also be implemented in one or more pieces of software and/or hardware.

Those skilled in the art should understand that the embodiments of this application may be provided as a method, a system, or a computer program product. Therefore, this application may be implemented in a form of a complete hardware embodiment, a complete software embodiment, or an embodiment combining software and hardware. Moreover, this application may be in the form of a computer program product implemented on one or more computer usable storage media (including, but not limited to, a magnetic disk memory, a CD-ROM, an optical memory and the like) including computer usable program codes.

This application is described with reference to flowcharts and/or block diagrams of the method, device (system) and computer program product according to the embodiments of the present invention. It should be understood that a computer program instruction may be used to implement each process and/or block in the flowcharts and/or block diagrams and combinations of processes and/or blocks in the flowcharts and/or block diagrams. These computer program instructions may be provided to a general-purpose computer, a special-purpose computer, an embedded processor, or a processor of another programmable data processing device to generate a machine, so that the instructions executed by the computer or the processor of another programmable data processing device generate an apparatus configured to implement a specified function in one or more processes in the flowcharts and/or in one or more blocks in the block diagrams.

These computer program instructions may also be stored in a computer readable memory that can guide a computer or another programmable data processing device to work in a particular manner, such that the instructions stored in the computer readable memory generate an article of manufacture that includes an instruction apparatus. The instruction apparatus implements a function specified in one or more processes in the flowcharts and/or in one or more blocks in the block diagrams.

These computer program instructions may also be loaded onto a computer or another programmable data processing device, such that a series of operation steps are performed on the computer or another programmable device, thus generating computer-implemented processing. Therefore, the instructions executed on the computer or another programmable device provide steps for implementing a function specified in one or more processes in the flowcharts and/or in one or more blocks in the block diagrams.

In a typical configuration, the computing device includes one or more central processing units (CPUs), an input/output interface, a network interface, and a memory.

The memory may include computer readable media such as a volatile memory, a Random Access Memory (RAM), and/or a non-volatile memory, e.g., a Read-Only Memory (ROM) or a flash RAM. The memory is an example of a computer readable medium.

The computer readable medium includes non-volatile and volatile media as well as movable and non-movable media, and may implement information storage by means of any method or technology. The information may be a computer readable instruction, a data structure, and a module of a program or other data. An example of the storage medium of a computer includes, but is not limited to, a phase change memory (PRAM), a static random access memory (SRAM), a dynamic random access memory (DRAM), other types of Random Access Memory (RAM), a Read Only Memory (ROM), an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible to the computing device. According to the definition in this text, the computer readable medium does not include transitory media, such as a modulated data signal and a carrier.

It should be further noted that the terms "include," "comprise" or other variations thereof are intended to cover non-exclusive inclusion, so that a process, method, commodity or device including a series of elements not only includes the elements, but also includes other elements not clearly listed, or further includes elements inherent to the process, method, commodity or device. In the absence of more limitations, an element defined by "including a/an ..." does not exclude that the process, method, commodity or device including the element further has other identical elements.

Those skilled in the art should understand that the embodiments of this application may be provided as a method, a system, or a computer program product. Therefore, this application may be implemented in a form of a complete hardware embodiment, a complete software embodiment, or an embodiment combining software and hardware. Moreover, this application may be in the form of a computer program product implemented on one or more computer usable storage media (including, but not limited to, a magnetic disk memory, a CD-ROM, an optical memory and the like) including computer usable program codes.

This application may be described in a general context of a computer executable instruction executed by a computer, for example, a program module. Generally, the program module includes a routine, a program, an object, an assembly, a data structure, and the like for executing a specific task or implementing a specific abstract data type. This application may also be implemented in distributed computing environments. In the distributed computing environments, a task is executed by remote processing devices connected through a communications network. In the distributed computing environments, the program module may be located in local and remote computer storage media including a storage device.

Various embodiments in this specification are described progressively. The same or similar parts between the embodiments may be referenced to one another. In each embodiment, the part that is different from other embodiments is mainly described. Particularly, the system embodiment is described in a relatively simple manner because it is similar to the method embodiment, and for related parts, reference can be made to the parts described in the method embodiment.

The above description is merely embodiments of this application, which are not used to limit this application. For those skilled in the art, this application may have various alterations and changes. Any modification, equivalent replacement, improvement and the like made without departing from the spirit and principle of this application should be included in the scope of the claims of this application.

## Claims

1. An image processing method, comprising:
acquiring features of multiple images of a target object and a standard feature of the target object; and
determining trusted images of the target object from the multiple images according to similarities between the features of the multiple images and the standard feature, wherein similarities between features of the trusted images and the standard feature meet a preset similarity requirement.

2. The method of claim 1, wherein the acquiring a standard feature of the target object comprises:
acquiring an average feature of the multiple images, and taking the average feature of the multiple images as the standard feature of the target object;
or,
acquiring an average feature of the multiple images, and taking a feature in the features of the multiple images that is most similar to the average feature as the standard feature of the target object.

3. The method of claim 1, wherein the determining trusted images of the target object from the multiple images according to similarities between the features of the multiple images and the standard feature comprises:
taking some or all of images among the multiple images having similarities between features thereof and the standard feature greater than a preset similarity threshold as the trusted images of the target object; or
determining distribution data of the similarities between the features of the multiple images and the standard feature, determining a similarity interval in the distribution data in which an image density is greater than a preset density, and taking some or all images corresponding to the determined similarity interval as the trusted images of the target object.

4. The method of any of claims 1 to 3, wherein the method further comprises:
determining similarities between trusted images of a first target object and trusted images of a second target object to obtain multiple pieces of similarity data; and
determining, according to the multiple pieces of similarity data, whether the first target object is similar to the second target object.

5. The method of claim 4, wherein the determining, according to the multiple pieces of similarity data, whether the first target object is similar to the second target object comprises:
determining that the first target object is similar to the second target object if an average value of the multiple pieces of similarity data is greater than a preset average threshold; or
determining that the first target object is similar to the second target object if distribution of the multiple pieces of similarity data meets a preset similarity distribution requirement.

6. The method of claim 4, wherein the determining, according to the multiple pieces of similarity data, whether the first target object is similar to the second target object comprises:
determining whether the quantity of the multiple pieces of similarity data meets a preset quantity requirement, and if yes, determining, according to the multiple pieces of similarity data, whether the first target object is similar to the second target object.

7. An image processing method, comprising:
acquiring trusted images of a first target object and trusted images of a second target object; and
determining, according to the trusted images of the first target object and the trusted images of the second target object, whether the first target object is similar to the second target object,
wherein the trusted images of the first target object are images determined from multiple images of the first target object, and similarities between features of the trusted images of the first target object and a standard feature of the first target object meet a first preset similarity requirement; the trusted images of the second target object are images determined from multiple images of the second target object, and similarities between features of the trusted images of the second target object and a standard feature of the second target object meet a second preset similarity requirement.

8. The method of claim 7, wherein
the standard feature of the first target object is an average feature of the multiple images of the first target object; or the standard feature of the first target object is a feature in features of the multiple images of the first target object that is most similar to an average feature of the multiple images of the first target object; and
the standard feature of the second target object is an average feature of the multiple images of the second target object; or the standard feature of the second target object is a feature in features of the multiple images of the second target object that is most similar to an average feature of the multiple images of the second target object.

9. The method of claim 7, wherein the determining, according to the trusted images of the first target object and the trusted images of the second target object, whether the first target object is similar to the second target object comprises:
determining that the first target object is similar to the second target object if an average value of multiple pieces of similarity data between the trusted images of the first target object and the trusted images of the second target object is greater than a preset average threshold; or
determining that the first target object is similar to the second target object if distribution of multiple pieces of similarity data between the trusted images of the first target object and the trusted images of the second target object meets a preset similarity distribution requirement.

10. The method of any of claims 7 to 9, wherein
the first target object is any target object in a database of target objects; and the second target object is any target object in the database other than the first target object; or
the first target object is a target object specified by a user, and the second target object is any target object in a database of target objects.

11. An image processing method, comprising:
acquiring features of multiple images of a first target object, a standard feature of the first target object, features of multiple images of a second target object, and a standard feature of the second target object;
determining trusted images of the first target object from the multiple images of the first target object according to similarities between the features of the multiple images of the first target object and the standard feature of the first target object, and determining trusted images of the second target object from the multiple images of the second target object according to similarities between the features of the multiple images of the second target object and the standard feature of the second target object, wherein similarities between features of the trusted images of the first target object and the standard feature thereof meet a first preset similarity requirement, and similarities between features of the trusted images of the second target object and the standard feature thereof meet a second preset similarity requirement; and
determining, according to the trusted images of the first target object and the trusted images of the second target object, whether the first target object is similar to the second target object.

12. The method of claim 11, wherein the first preset similarity requirement is identical to the second preset similarity requirement, or the first preset similarity requirement is different from the second preset similarity requirement.

13. An image processing apparatus, comprising:
a feature acquisition module configured to acquire features of multiple images of a target object and a standard feature of the target object; and
an image selection module configured to determine trusted images of the target object from the multiple images according to similarities between the features of the multiple images and the standard feature, wherein similarities between features of the trusted images and the standard feature meet a preset similarity requirement.

14. An image processing apparatus, comprising:
an image acquisition module configured to acquire trusted images of a first target object and trusted images of a second target object; and
an image comparing module configured to determine, according to the trusted images of the first target object and the trusted images of the second target object, whether the first target object is similar to the second target object,
wherein the trusted images of the first target object are images determined from multiple images of the first target object, and similarities between features of the trusted images of the first target object and a standard feature of the first target object meet a first preset similarity requirement; the trusted images of the second target object are images determined from multiple images of the second target object, and similarities between features of the trusted images of the second target object and a standard feature of the second target object meet a second preset similarity requirement.

15. An image processing apparatus, comprising:
a data acquisition module configured to acquire features of multiple images of a first target object, a standard feature of the first target object, features of multiple images of a second target object, and a standard feature of the second target object;
an image determining module configured to determine trusted images of the first target object from the multiple images of the first target object according to similarities between the features of the multiple images of the first target object and the standard feature of the first target object, and determine trusted images of the second target object from the multiple images of the second target object according to similarities between the features of the multiple images of the second target object and the standard feature of the second target object, wherein similarities between features of the trusted images of the first target object and the standard feature thereof meet a first preset similarity requirement, and similarities between features of the trusted images of the second target object and the standard feature thereof meet a second preset similarity requirement; and
an image judging module configured to determine, according to the trusted images of the first target object and the trusted images of the second target object, whether the first target object is similar to the second target object.

16. An image processing device, comprising:
a processor; and
a memory configured to store a computer executable instruction, wherein when executed, the executable instruction causes the processor to:
acquire features of multiple images of a target object and a standard feature of the target object; and
determine trusted images of the target object from the multiple images according to similarities between the features of the multiple images and the standard feature, wherein similarities between features of the trusted images and the standard feature meet a preset similarity requirement.

17. An image processing device, comprising:
a processor; and
a memory configured to store a computer executable instruction, wherein when executed, the executable instruction causes the processor to:
acquire trusted images of a first target object and trusted images of a second target object; and
determine, according to the trusted images of the first target object and the trusted images of the second target object, whether the first target object is similar to the second target object,
wherein the trusted images of the first target object are images determined from multiple images of the first target object, and similarities between features of the trusted images of the first target object and a standard feature of the first target object meet a first preset similarity requirement; the trusted images of the second target object are images determined from multiple images of the second target object, and similarities between features of the trusted images of the second target object and a standard feature of the second target object meet a second preset similarity requirement.

18. An image processing device, comprising:
a processor; and
a memory configured to store a computer executable instruction, wherein when executed, the executable instruction causes the processor to:
acquire features of multiple images of a first target object, a standard feature of the first target object, features of multiple images of a second target object, and a standard feature of the second target object;
determine trusted images of the first target object from the multiple images of the first target object according to similarities between the features of the multiple images of the first target object and the standard feature of the first target object, and determine trusted images of the second target object from the multiple images of the second target object according to similarities between the features of the multiple images of the second target object and the standard feature of the second target object, wherein similarities between features of the trusted images of the first target object and the standard feature thereof meet a first preset similarity requirement, and similarities between features of the trusted images of the second target object and the standard feature thereof meet a second preset similarity requirement; and
determine, according to the trusted images of the first target object and the trusted images of the second target object, whether the first target object is similar to the second target object.

19. A storage medium, configured to store a computer executable instruction, wherein when executed, the executable instruction implements the following process:
acquiring features of multiple images of a target object and a standard feature of the target object; and
determining trusted images of the target object from the multiple images according to similarities between the features of the multiple images and the standard feature, wherein similarities between features of the trusted images and the standard feature meet a preset similarity requirement.

20. A storage medium, configured to store a computer executable instruction, wherein when executed, the executable instruction implements the following process:
acquiring trusted images of a first target object and trusted images of a second target object; and
determining, according to the trusted images of the first target object and the trusted images of the second target object, whether the first target object is similar to the second target object,
wherein the trusted images of the first target object are images determined from multiple images of the first target object, and similarities between features of the trusted images of the first target object and a standard feature of the first target object meet a first preset similarity requirement; the trusted images of the second target object are images determined from multiple images of the second target object, and similarities between features of the trusted images of the second target object and a standard feature of the second target object meet a second preset similarity requirement.

21. A storage medium, configured to store a computer executable instruction, wherein when executed, the executable instruction implements the following process:
acquiring features of multiple images of a first target object, a standard feature of the first target object, features of multiple images of a second target object, and a standard feature of the second target object;
determining trusted images of the first target object from the multiple images of the first target object according to similarities between the features of the multiple images of the first target object and the standard feature of the first target object, and determining trusted images of the second target object from the multiple images of the second target object according to similarities between the features of the multiple images of the second target object and the standard feature of the second target object, wherein similarities between features of the trusted images of the first target object and the standard feature thereof meet a first preset similarity requirement, and similarities between features of the trusted images of the second target object and the standard feature thereof meet a second preset similarity requirement; and
determining, according to the trusted images of the first target object and the trusted images of the second target object, whether the first target object is similar to the second target object.
